(19) Europäisches Patentamt
European Patent Office
Office européen des brevets

(11) EP 3 360 903 B1

(12) EUROPEAN PATENT SPECIFICATION

(45) Date of publication and mention
of the grant of the patent:
02.11.2022 Bulletin 2022/44

(21) Application number: 16853697.7

(22) Date of filing: 06.10.2016

(51) International Patent Classification (IPC):
C08F 261/12 (2006.01)     C08F 2/44 (2006.01)
B32B 27/20 (2006.01)      C08F 2/50 (2006.01)
C08F 8/00 (2006.01)       C08F 16/38 (2006.01)
C09J 4/00 (2006.01)       C09J 11/06 (2006.01)
C09J 129/14 (2006.01)     G02F 1/1333 (2006.01)
G06F 3/041 (2006.01)      C09J 4/06 (2006.01)
G06F 3/045 (2006.01)

(52) Cooperative Patent Classification (CPC):
(C-Sets available)
C08F 2/48; C08F 2/50; C08F 8/28; C08F 8/48;
C08F 261/12; C09J 4/00; C09J 4/06; C09J 129/14;
G02F 1/1333; G06F 3/041; G06F 2203/04103

(Cont.)

(86) International application number:
PCT/JP2016/079799

(87) International publication number:
WO 2017/061545 (13.04.2017 Gazette 2017/15)

(54) **POLY(VINYL ACETAL) RESIN COMPOSITION, ADHESIVE SHEET, INTERLAMINAR FILLING MATERIAL FOR TOUCH PANEL, AND LAMINATE**

POLY(VINYLACETAL)HARZZUSAMMENSETZUNG, KLEBEFOLIE, INTERLAMINARES FÜLLMATERIAL FÜR BERÜHRUNGSTAFEL UND LAMINAT

COMPOSITION DE RÉSINE POLY(ACÉTAL DE VINYLE), FEUILLE ADHÉSIVE, MATÉRIAU DE REMPLISSAGE INTERCOUCHE POUR ÉCRAN TACTILE, ET STRATIFIÉ

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 07.10.2015 JP 2015199735
07.10.2015 JP 2015199736

(43) Date of publication of application:
15.08.2018 Bulletin 2018/33

(73) Proprietor: Sekisui Chemical Co., Ltd.
Osaka-shi, Osaka 530-0047 (JP)

(72) Inventors:
• KAKEHI, Takamaro
Mishima-gun
Osaka 618-0021 (JP)

• FUKATANI, Juichi
Mishima-gun
Osaka 618-0021 (JP)

(74) Representative: Cabinet Beau de Loménie
158, rue de l'Université
75340 Paris Cedex 07 (FR)

(56) References cited:
EP-A1- 0 124 812      EP-A1- 3 296 846
EP-A1- 3 360 925      EP-A1- 3 360 940
EP-A1- 3 361 358      EP-A1- 3 361 359
WO-A2-2014/193903     JP-A- H0 474 172
JP-A- S5 496 541      JP-A- S5 747 308
JP-A- H05 320 582     JP-A- H07 178 880
JP-A- H11 236 535     JP-A- 2001 214 070
JP-A- 2003 119 207    JP-A- 2011 102 027
JP-A- 2015 151 499

(52) Cooperative Patent Classification (CPC): (Cont.)

C-Sets
**C08F 8/48, C08F 8/28, C08F 16/06;**
**C08F 261/12, C08F 222/103;**
**C09J 4/06, C08F 261/12;**
**C09J 129/14, C08K 5/0025;**
**C09J 129/14, C08K 5/07, C08L 33/06**

**Description**

TECHNICAL FIELD

Using a polyvinyl acetal resin composition that is excellent in thermal stability and moldable by an extrusion method and can exhibit a high storage modulus even under high temperature, the present invention relates to a use of an interlayer filling material and to a laminate produced using the interlayer filling material for a touch panel.

BACKGROUND ART

Polyvinyl acetal is widely used for various applications such as coatings, wash primers, binders for ceramics, and interlayer films for a laminated glass, because of its excellent toughness, adhesiveness to inorganic substances, and solubility in organic solvents.

However, polyvinyl acetal unfortunately has its storage modulus remarkably lowered under high temperature, though it has a high storage modulus under normal temperature at around 20°C.

To suppress the undesired reduction, Patent Literature 1 discloses a polymer film obtained by molding a polymer solution containing a polyvinyl acetal, a crosslinking agent, and an organic solvent into a film by a solvent casting method, wherein the polymer film is obtained by crosslinking the polyvinyl acetal to the degree of crosslinking of 1% to 60% in a step of vaporizing the organic solvent in the polymer solution and/or in a step after production of the polymer film. According to the technique disclosed in Patent Literature 1, the polyvinyl acetal is crosslinked with use of the crosslinking agent such as boric acid. A polymer film formed of a crosslinked polyvinyl acetal can exhibit a high storage modulus even under high temperature. For the industrial use of polyvinyl acetal, it is advantageous to perform molding by an extrusion method that is excellent in production efficiency. However, a polyvinyl acetal resin composition containing boric acid is reacted at high temperature during extrusion-molding to form minute gels, failing to provide a uniform molded article.

CITATION LIST

- Patent Literature

Patent Literature 1: JP 2006-137078 A

JP 2003-119207 A, JP 2011-102027 A, JP 2015-151499 A and EP 3 296 846 A1, which is prior art pursuant to Article 54(3) EPC, each show a polyvinyl acetal resin composition containing: a polyvinyl acetal; a photoradical polymerization initiator; and a monomer or oligomer having a radical polymerizable double bond.

A polyvinyl acetal resin composition containing a polyvinyl acetal, a photoradical polymerization initiator, and a monomer or oligomer having a radical polymerizable double bond is not reacted even under high temperature during extrusion molding so as not to form gels, and is crosslinked by irradiation with light after the molding to exhibit a high storage modulus even under high temperature.

SUMMARY OF INVENTION

The present invention is defined in the claims.

The photoradical polymerization initiator (hydrogen abstraction type photoradical polymerization initiator) is highly stable even under high temperature and is not activated at a normal extrusion molding temperature (at around 100°C to 220°C) for polyvinyl acetal. However, the photoradical polymerization initiator is activated by irradiation with light to generate radicals, and the radicals abstract hydrogen atoms
of C-H in the polyvinyl acetal to cause crosslinking via the monomer or oligomer having a radical polymerizable double bond. This presumably allows the polyvinyl acetal resin composition to exhibit high storage stability even under high temperature.

The polyvinyl acetal resin composition used in the present invention contains a polyvinyl acetal, a photoradical polymerization initiator, and a monomer or oligomer having a radical polymerizable double bond.

The polyvinyl acetal can be prepared by saponifying polyvinyl acetate to prepare polyvinyl alcohol and then acetalizing the polyvinyl alcohol with an aldehyde in the presence of a catalyst.

The degree of saponification of the polyvinyl alcohol is not particularly limited, and is commonly within a range of 70 to 99.9 mol%. The degree of saponification is preferably 70 to 99.8 mol%, more preferably 80 to 99.8 mol%.

The average degree of polymerization of the polyvinyl alcohol is not particularly limited. Preferably, the polyvinyl alcohol used has a high average degree of polymerization because a high-molecular-weight polyvinyl acetal is preferred from the standpoint of achieving more excellent properties. The lower limit of the average degree of polymerization of the polyvinyl alcohol is preferably 200 and the upper limit thereof is preferably 4,000. With the average degree of polymerization of the polyvinyl alcohol falling within this range, the reaction upon acetalization of the polyvinyl alcohol is facilitated and the resulting polyvinyl acetal can exhibit high mechanical strength. For an interlayer filling material for a touch panel described later, scattering of fragments when the personal digital assistant is damaged can be suppressed. The lower limit of the average degree of polymerization of the polyvinyl alcohol is more preferably 600 and the upper limit thereof is more preferably 3,800. The lower limit is still more preferably 800 and the upper limit is still more preferably 3,600.

The average degree of polymerization of the polyvinyl alcohol as used herein refers to a viscosity average degree of polymerization obtained based on JIS K6726:1994. In the case where the polyvinyl alcohol resin used is a mixture of two or more types of polyvinyl alcohol resins, the average degree of polymerization of the polyvinyl alcohol refers to an apparent viscosity average degree of polymerization of the whole polyvinyl alcohol resin mixture.

For acetalization of the polyvinyl alcohol with an aldehyde in the presence of a catalyst, a solution containing the polyvinyl alcohol may be used. An exemplary solvent used for the solution containing the polyvinyl alcohol is water.

The aldehyde is not particularly limited. Commonly, a C1-C10 aldehyde is favorably used.

The C1-C10 aldehyde is not particularly limited, and may be either a linear aldehyde or a branched aldehyde. Examples thereof include n-butyraldehyde, isobutyraldehyde, n-valeraldehyde, 2-ethylbutyraldehyde, n-hexylaldehyde, n-octylaldehyde, n-nonylaldehyde, n-decylaldehyde, formaldehyde, acetaldehyde, and benzaldehyde. These aldehydes may be used alone or in combination of two or more thereof. Preferred among these are n-butyraldehyde, n-hexylaldehyde, and n-valeraldehyde, and more preferred is n-butyraldehyde.

In other words, the polyvinyl acetal preferably contains polyvinyl butyral (when the aldehyde is n-butyraldehyde, the polyvinyl acetal is referred to as polyvinyl butyral). The use of the polyvinyl butyral allows appropriate adhesion force to glass, leading to better light resistance and weather resistance. Two or more types of polyvinyl acetals may be optionally used in combination.

For an interlayer filling material for a touch panel described later, the polyvinyl acetal preferably has less intermolecular crosslinks before being crosslinked by irradiation with light because excellent followability to steps and removal of bubbles can be achieved. With less intermolecular crosslinks, the polyvinyl acetal can provide an interlayer filling material for a touch panel having better followability to steps even when the molecular weight, acetyl group content, and degree of acetalization of the polyvinyl acetal used are not changed. Moreover, with a larger molecular weight, the polyvinyl acetal can provide better scattering prevention properties.

A polyvinyl acetal with less intermolecular crosslinks is preferably obtained, for example, by a method in which addition of the aldehyde is adjusted not to be excessive before or during the acetalization reaction with the aldehyde to avoid crosslinking of the main chains of the adjacent polyvinyl alcohol molecules. Addition of the aldehyde in an amount exceeding the amount required for the acetalization increases the degree of crosslinking.

The lower limit of the content rate of hydroxy groups (hydroxy group content) of the polyvinyl acetal is preferably 16 mol% and the upper limit thereof is preferably 45 mol%. With the hydroxy group content of the polyvinyl acetal falling within this range, the polyvinyl acetal has high adhesion force to glass or the like and excellent compatibility with a plasticizer described later, and exhibits high flexibility to have better handleability. With the polyvinyl acetal resin composition of the present invention, the interlayer filling material for a touch panel has better adhesion force to glass and better followability to steps.

The lower limit of the hydroxy group content of the polyvinyl acetal is more preferably 18 mol% and the upper limit thereof is more preferably 40 mol%. The lower limit is still more preferably 20 mol% and the upper limit is still more preferably 38 mol%. For an interlayer filling material for a touch panel described later, the lower limit of the hydroxy group content is more preferably 18 mol%, still more preferably 20 mol%, particularly preferably 22 mol%, while the upper limit thereof is more preferably 40 mol%, still more preferably 38 mol%, further preferably 36 mol%, particularly preferably 35 mol%.

The hydroxy group content of the polyvinyl acetal is a value in percentage of the mole fraction (mol%) obtained by dividing the amount of ethylene groups to which hydroxy groups are bonded by the total amount of ethylene groups of the main chain. The amount of ethylene groups to which hydroxy groups are bonded can be determined, for example, by the method in conformity with JIS K6728 "Testing methods for polyvinyl butyral".

The lower limit of the degree of acetylation (acetyl group content) of the polyvinyl acetal is preferably 0.1 mol% and the upper limit thereof is preferably 30 mol%. With the acetyl group content of the polyvinyl acetal falling within this range, the polyvinyl acetal has excellent humidity resistance and high compatibility with a plasticizer and exhibits high flexibility to have better handleability. Moreover, the reaction efficiency during the production of the polyvinyl acetal is high. For an interlayer filling material for a touch panel described later, the interlayer filling material for a touch panel has better adhesion force to glass and better followability to steps.

The lower limit of the acetyl group content of the polyvinyl acetal is more preferably 0.2 mol% and the upper limit thereof is more preferably 24 mol%. The lower limit is still more preferably 0.3 mol% and the upper limit is still more preferably 20 mol%. The upper limit is particularly preferably 19.5 mol%, most preferably 15 mol%.

The acetyl group content of the polyvinyl acetal is a value in percentage of the mole fraction (mol%) obtained by subtracting the amount of ethylene groups to which acetal groups are bonded and the amount of ethylene groups to which hydroxy groups are bonded from the total amount of ethylene groups of the main chain and then dividing the obtained value by the total amount of ethylene groups of the main chain. The amount of ethylene groups to which acetal groups are bonded can be determined, for example, in conformity with JIS K6728 "Testing methods for polyvinyl butyral".

The degree of acetylation of the polyvinyl acetal is controlled within the above range, for example, by adjusting the degree of saponification of the polyvinyl alcohol. In other words, the acetyl group content of the polyvinyl acetal depends on the degree of saponification of the polyvinyl alcohol. In the case where the polyvinyl alcohol used has a lower degree of saponification, the acetyl group content of the polyvinyl acetal is increased. By contrast, in the case where the polyvinyl alcohol used has a higher degree of saponification, the acetyl group content of the polyvinyl acetal is reduced.

The lower limit of the degree of acetalization of the polyvinyl acetal is preferably 50 mol% and the upper limit thereof is preferably 85 mol%. With the degree of acetalization of the polyvinyl acetal falling within this range, the reaction time needed for the production of the polyvinyl acetal can be shortened, and the resulting polyvinyl acetal has excellent compatibility with a plasticizer and exhibits high flexibility to have better handleability. The lower limit of the degree of acetalization is more preferably 54 mol% and the upper limit thereof is more preferably 82 mol%. The lower limit is still more preferably 58 mol% and the upper limit is still more preferably 79 mol%. The upper limit is particularly preferably 77 mol%.

The degree of acetalization of the polyvinyl acetal is a value in percentage of the mole fraction (mol%) obtained by dividing the amount of ethylene groups to which acetal groups are bonded by the total amount of ethylene groups of the main chain. The degree of acetalization can be determined by measuring the acetyl group content and the vinyl alcohol content (content rate of hydroxy groups) by the method in conformity with JIS K6728 "Testing methods for polyvinyl butyral", calculating the mole fractions based on the measurement results, and subtracting the acetyl group content and the vinyl alcohol content from 100 mol%.

The degree of acetalization of the polyvinyl acetal can be controlled, for example, by adjusting the amount of the aldehyde. When the amount of the aldehyde is smaller, the degree of acetalization of the polyvinyl acetal is lowered. When the amount of the aldehyde is larger, the degree of acetalization of the polyvinyl acetal is increased.

Of photoradical polymerization initiators activated by irradiation with light to generate active radicals, examples include intramolecular cleavage type photoradical polymerization initiators, hydrogen abstraction type photoradical polymerization initiators, and electron-transfer type photoradical polymerization initiators. However, a hydrogen abstraction type photoradical polymerization initiator is used and is highly stable under high temperature and not activated at a normal extrusion molding temperature (at around 130°C to 220°C) for polyvinyl acetal so as to allow the polyvinyl acetal resin composition to be easily moldable by an extrusion method.

Examples of the hydrogen abstraction type photoradical polymerization initiators include benzophenone, thioxanthone, and Michler's ketone. These photoradical polymerization initiators may be used alone or in combination of two or more thereof. In particular, preferred is benzophenone because it is activated well when irradiated with light and is particularly excellent in stability under high temperature to be hardly activated at the extrusion temperature for polyvinyl acetal.

The amount of the photoradical polymerization initiator is not particularly limited. The lower limit of the amount relative to 100 parts by weight of the polyvinyl acetal is preferably 0.1 parts by weight and the upper limit thereof is preferably 5.0 parts by weight. With the amount of the photoradical polymerization initiator of less than 0.1 parts by weight, the polyvinyl acetal resin composition may not be sufficiently crosslinked by irradiation with light, failing to exhibit a high storage modulus under high temperature. With the amount of the photoradical polymerization initiator of more than 5.0 parts by weight, the weather resistance may be lowered to cause yellowing. The lower limit of the amount of the photoradical polymerization initiator is more preferably 0.3 parts by weight and the upper limit thereof is more preferably 3.0 parts by weight. The lower limit is still more preferably 0.4 parts by weight and the upper limit is still more preferably 1.5 parts by weight. The lower limit is particularly preferably 0.5 parts by weight and the upper limit is particularly preferably 1.0 part by weight.

The monomer or oligomer having a radical polymerizable double bond serves as a bridge for crosslinking polyvinyl acetal molecules upon irradiation with ultraviolet light. For achieving high crosslinking density, preferred is a polyfunctional monomer or oligomer having two or more radical polymerizable double bonds in a molecule.

Examples of the polyfunctional monomer or oligomer include acrylates and methacrylates. Specific examples thereof include trimethylolpropane triacrylate, tetramethylolmethane tetraacrylate, pentaerythritol triacrylate, pentaerythritol tetraacrylate, dipentaerythritol monohydroxypentaacrylate, dipentaerythritol hexaacrylate, and methacrylates of the same kinds. The examples further include 1,4-butylene glycol diacrylate, 1,6-hexanediol diacrylate, polypropylene glycol #700 diacrylate, polyethylene glycol diacrylate, commercially available oligoester acrylate, and methacrylates of the same kinds. These polyfunctional monomers or oligomers may be used alone or in combination of two or more thereof.

The monomer or oligomer having a radical polymerizable double bond preferably has a molecular weight of 10,000 or less. The use of a monomer or oligomer having a radical polymerizable double bond with a molecular weight of 10,000 or less enables efficient three-dimensional reticulation by irradiation with light. The monomer or oligomer having a radical polymerizable double bond more preferably has a molecular weight of 5,000 or less.

The amount of the monomer or oligomer having a radical polymerizable double bond is not particularly limited. The lower limit of the amount thereof relative to 100 parts by weight of the polyvinyl acetal is preferably 0.1 parts by weight and the upper limit thereof is preferably 40 parts by weight. With the amount of the monomer or oligomer having a radical polymerizable double bond falling within this range, the polyvinyl acetal resin composition is sufficiently crosslinked by irradiation with light to exhibit a high storage modulus under high temperature, and is not likely to cause visual distortion due to granular local crosslinking. The lower limit of the amount of the monomer or oligomer having a radical polymerizable double bond is more preferably 0.5 parts by weight and the upper limit thereof is more preferably 25 parts by weight. The lower limit is still more preferably 1 part by weight and the upper limit is still more preferably 15 parts by weight. The upper limit is particularly preferably 8 parts by weight.

The plasticizer contained allows the polyvinyl acetal resin composition to be plasticized to have enhanced flexibility. For an interlayer filling material for a touch panel described later, the plasticizer blended in the composition allows exertion of especially high followability to steps.

The plasticizer is not particularly limited and a conventionally known plasticizer may be used. Specific examples thereof include organic acid ester plasticizers such as monobasic organic acid esters and polybasic organic acid esters, and phosphoric acid plasticizers such as organophosphate plasticizers and organophosphite plasticizers. These plasticizers may be used alone or in combination of two or more thereof. Preferred among these are organic acid ester plasticizers. The plasticizer is preferably a liquid plasticizer.

The monobasic organic acid ester is not particularly limited, and examples thereof include glycol esters obtainable by reaction between a monobasic organic acid (e.g., butyric acid, isobutyric acid, caproic acid, 2-ethylbutyric acid, heptanoic acid, n-octylic acid, 2-ethylhexylic acid, pelargonic acid (n-nonylic acid), decylic acid) and a glycol (e.g., triethylene glycol, tetraethylene glycol, tripropylene glycol).

The polybasic organic acid ester is not particularly limited, and examples thereof include ester compounds obtainable by reaction between a polybasic organic acid (e.g., adipic acid, sebacic acid, azelaic acid) and a C4-C8 linear or branched alcohol.

The organic acid ester plasticizer is preferably a diester plasticizer represented by the following formula (1). The use of the diester plasticizer improves the moldability.

$$R^1\text{-CO-(-}R^3\text{-O-)}_p\text{-CO-}R^2 \qquad (1)$$

In the formula (1), $R^1$ and $R^2$ each represent a C5-C10 (preferably C6-C10) organic group, $R^3$ represents an ethylene, isopropylene, or n-propylene group, and p represents an integer of 3 to 10.

Specific examples of the organic acid ester include triethylene glycol-di-2-ethylbutyrate, triethylene glycol-di-2-ethylhexanoate, triethylene glycol dicaprylate, triethylene glycol-di-n-octanoate, triethylene glycol-di-n-heptanoate, tetraethylene glycol-di-n-heptanoate, tetraethylene glycol-di-2-ethylhexanoate, dibutyl sebacate, dioctyl azelate, dibutyl carbitol adipate, ethylene glycol-di-2-ethylbutyrate, 1,3-propylene glycol-di-2-ethylbutyrate, 1,4-butylene glycol-di-2-ethylbutyrate, diethylene glycol-di-2-ethylbutyrate, diethylene glycol-di-2-ethylhexanoate, dipropylene glycol-di-2-ethylbutyrate, triethylene glycol-di-2-ethylpentanoate, tetraethylene glycol-di-2-ethylbutyrate, diethylene glycol dicaprylate, dihexyl adipate, dioctyl adipate, hexylcyclohexyl adipate, diisononyl adipate, heptylnonyl adipate, oil-modified alkyd sebacate, mixtures of phosphoric acid esters and adipic acid esters, and mixed type adipic acid esters prepared from a C4-C9 alkyl alcohol and a C4-C9 cyclic alcohol.

The organophosphate plasticizer is not particularly limited, and examples thereof include tributoxyethyl phosphate, isodecylphenyl phosphate, and triisopropyl phosphate.

Among the plasticizers, preferred is at least one selected from the group consisting of dihexyl adipate (DHA), triethylene glycol-di-2-ethylhexanoate (3GO), tetraethylene glycol-di-2-ethylhexanoate (4GO), triethylene glycol-di-2-ethyl butyrate (3GH), tetraethylene glycol-di-2-ethyl butyrate (4GH), tetraethylene glycol-di-n-heptanoate (4G7) and triethylene glycol-di-n-heptanoate (3G7). More preferred are triethylene glycol-di-2-ethylbutyrate, triethylene glycol-di-n-heptanoate (3G7), and triethylene glycol-di-2-ethylhexanoate (3GO), and still more preferred is triethylene glycol-di-2-ethylhexanoate.

The amount of the plasticizer is not particularly limited. The lower limit of the amount relative to 100 parts by weight of the polyvinyl acetal is preferably 1 part by weight and the upper limit thereof is preferably 75 parts by weight. With the amount of the plasticizer falling within this range, high toughness and adhesiveness to inorganic substances can be exhibited. Moreover, bleeding of the plasticizer can be prevented. The lower limit of the amount of the plasticizer is more preferably 2 parts by weight and the upper limit thereof is more preferably 60 parts by weight. The lower limit is still more preferably 3 parts by weight and the upper limit is still more preferably 50 parts by weight. The lower limit is particularly preferably 4 parts by weight and the upper limit is particularly preferably 40 parts by weight. The lower limit is most preferably 5 parts by weight and the upper limit is most preferably 30 parts by weight.

For an interlayer filling material for a touch panel described later, the amount of the plasticizer is not particularly limited. The lower limit of the amount of the plasticizer relative to 100 parts by weight of the polyvinyl acetal is preferably 5 parts by weight and the upper limit thereof is preferably 75 parts by weight. With the amount of the plasticizer falling within this range, sufficient suppression of both of the following two phenomena is likely to be achieved: scattering of fragments when the personal digital assistant is damaged, and remaining of bubbles at steps upon filling of an interlayer space (upon attachment). With the amount of the plasticizer of less than 5 parts by weight, the moldability of the interlayer filling material for a touch panel may be lowered. With the amount of the plasticizer of more than 75 parts by weight, the transparency of the interlayer filling material for a touch panel may be lowered or bleeding of the plasticizer may occur. The lower limit of the amount of the plasticizer is more preferably 10 parts by weight, still more preferably 15 parts by weight, particularly preferably 20 parts by weight. The upper limit thereof is more preferably 65 parts by weight, still more preferably 55 parts by weight, particularly preferably 45 parts by weight.

For an interlayer filling material for a touch panel described later, the amount of the plasticizer is preferably small because the polyvinyl acetal generates cohesion force. Specifically, the compatibility between the polyvinyl acetal and the plasticizer is preferably enhanced to reduce the amount of the plasticizer. This can improve the scattering prevention properties.

The compatibility between the polyvinyl acetal and the plasticizer can be enhanced, for example, by a method of increasing the degree of acetalization of the polyvinyl acetal or a method of increasing the acetyl group content. Alternatively, a method of lowering the blocking properties of hydroxy groups of the polyvinyl acetal is also preferred. Blocking of hydroxy groups is preferably suppressed by lowering the aging temperature.

In the case of the present invention's interlayer filling material for a touch panel described later, the total amount of the polyvinyl acetal and plasticizer in the interlayer filling material for a touch panel is preferably 50% by weight or more. With the total amount of the polyvinyl acetal and plasticizer of less than 50% by weight, scattering of fragments when the personal digital assistant is damaged is not likely to be sufficiently suppressed or bubbles are likely to be left at a step upon filling of an interlayer space (upon attachment). The lower limit of the total amount of the polyvinyl acetal and plasticizer is more preferably 60% by weight, still more preferably 70% by weight, further preferably 80% by weight, particularly preferably 90% by weight.

The polyvinyl acetal resin composition used in the present invention may contain, if needed, known additives such as an adhesion modifier, a tackifier resin, a plasticizer, an emulsifier, a softener, fine particles, a filler, a pigment, a dye, a silane coupling agent, an antioxidant, a surfactant, and wax.

The polyvinyl acetal resin composition can be used in a sheet shape, as well as a liquid form (dispersion, emulsion). In particular, the polyvinyl acetal resin composition molded into a sheet can be used as an adhesive sheet.

The polyvinyl acetal resin composition or adhesive sheet can be formed by a conventionally known method, such as an extrusion method, an application method, a casting method, a calendaring method, or a pressing method. In particular, an extrusion method is preferred because it contributes to excellent production efficiency. The polyvinyl acetal resin composition is not reacted even at high temperature during extrusion, avoiding formation of gels.

The polyvinyl acetal resin composition or adhesive sheet is crosslinked by irradiation with light to exhibit a high storage modulus even at high temperature. Specifically, for example, the storage modulus G' thereof at 200°C can be $5 \times 10^3$ Pa or higher, preferably $1 \times 10^4$ Pa or higher. The storage modulus G' at 200°C can be measured using a dynamic viscoelastometer such as ARES-G2 (TA Instruments) or DVA-200 (IT Measurement Co., Ltd.) under the conditions of a temperature decreasing rate of 3°C/min, a frequency of 1 Hz, and a strain of 1%.

The irradiation with light may be performed by any method. An exemplary method includes irradiating the molded polyvinyl acetal resin composition or the adhesive sheet with light using an UV light irradiation device such as an ultra-high pressure mercury lamp.

The wavelength or illuminance of the light for the irradiation may be appropriately determined in accordance with the type of the photoradical polymerization initiator. For example, in the case where benzophenone that is a hydrogen abstraction type photoradical polymerization initiator is used as the photoradical polymerization initiator, the irradiation is preferably performed using light having a wavelength of 250 to 400 nm at an illuminance of 10 mW/cm$^2$ for 10 seconds to 30 minutes.

The application of the polyvinyl acetal resin composition is not particularly limited, and exemplary applications include coating compositions, wash primers, binders for ceramics, interlayer films for a laminated glass, and interlayer filling materials for a touch panel. In particular, the polyvinyl acetal resin composition is remarkably useful as an interlayer filling material for a touch panel.

Touch panels are used in various fields. In a personal digital assistant such as a smartphone or a tablet PC, a touch panel is placed below a surface protection panel made of glass or the like. Below the touch panel, a polarizing film and a display are provided in the stated order.

In such a personal digital assistant, for the purpose of improving the transparency, luminance, and contrast on the display screen to enhance the visibility, an interlayer space between the surface protection panel and the touch panel and an interlayer space between the touch panel and the polarizing film are filled with a filling material that has a smaller difference in refractive index with these members than air does.

An acrylic adhesive or adhesive tape is often used as such an interlayer filling material for a touch panel from the standpoint of transparency, adhesiveness, and application properties. However, in the case where an acrylic adhesive or adhesive tape is attached as a filling material, bubbles may be entrapped during the attachment to be left between the surface protection panel and the filling material, lowering the visibility or durability. Moreover, a printing portion is formed at the periphery on the rear side of the surface protection panel for the purpose of masking or the like, and bubbles are likely to remain at the borders of steps formed by such a printing portion or steps formed by wiring on the touch panel, lowering the visibility or durability. Along with the recent trend of downsizing, thinning, or weight reduction of a personal digital assistant, a thinner filling material is desired. It has been difficult for conventional acrylic adhesives or adhesive tapes to achieve both the thin profile and properties of sufficiently following steps to prevent bubbles from being left at the steps (followability to steps).

In the case where the personal digital assistant is broken on impact of a fall or the like, conventional acrylic adhesives or adhesive tapes suffer cohesive failures, hardly suppressing scattering of fragments of glass or the like sufficiently. Though additional use of a scattering prevention film is considered, from the standpoint of the cost and thinning of the personal digital assistant, it is desired to suppress scattering without using a scattering prevention film.

As an alternative to a conventionally widely used acrylic adhesive, a sheet-shaped interlayer filling material for a touch panel formed of a plasticized polyvinyl acetal has been also considered as an interlayer filling material for a touch panel. Due to the low tackiness of the plasticized polyvinyl acetal at normal temperature, the sheet-shaped interlayer filling material for a touch panel is less likely to cause adhesive deposits on a punching blade in the punching process at normal temperature. In addition, it can sufficiently follow steps at decorative printing portions or wiring by pressure-bonding with heat. Moreover, an effect of suppressing scattering of glass fragments or the like can be expected when the personal digital assistant is broken on impact of a fall.

However, a touch panel produced using an interlayer filling material for a touch panel containing a plasticized polyvinyl acetal may suffer foaming when being exposed in high temperature and high humidity environment (e.g., temperature of 85°C and a humidity of 85%). Though an acrylic adhesive may also suffer such a phenomenon, the phenomenon is more significant in the case where a plasticized polyvinyl acetal is used.

The present inventors studied about the cause of the foaming that occurs when the interlayer filling material for a touch panel containing a plasticized polyvinyl acetal is exposed in high temperature and high humidity environment. As a result, they found that the foaming is caused by minute contaminants having a size of several to several tens of micrometers adhering to the surface of the adherend. In the case where the interlayer filling material for a touch panel is attached with such minute contaminants present on the surface of the adherend, the interlayer filling material for a touch panel cannot completely follow the contaminants even by the pressure-bonding with heat, so that very fine bubbles are left around the minute contaminants. Normally, such fine bubbles are hardly visible to the naked eye. However, they are considered to grow to be visible to the naked eye when exposed to high temperature and high humidity. The bubbles are considered to grow due to a partial deformation of the interlayer filling material for a touch panel by a stress that is applied when the gas generated by outgassing from the adherend (e.g., a polycarbonate plate, an acrylic plate, and a polarizing film) under high temperature and high humidity environment is concentrated on the fine bubbles.

To control this phenomenon, the present inventors found that the use of the polyvinyl acetal resin composition in the present invention as an interlayer filling material for a touch panel can prevent foaming even in high temperature and high humidity environment.

The interlayer filling material for a touch panel prepared from the polyvinyl acetal resin composition has high thermal stability and is easily moldable by, for example, an extrusion method. However, once irradiated with light, the photoradical polymerization initiator therein is activated to generate radicals, and the radicals abstract hydrogen atoms of C-H in the polyvinyl acetal, so that the polyvinyl acetal is crosslinked via the monomer or oligomer having a radical polymerizable double bond.

When such an interlayer filling material for a touch panel is used and heated (at around 85°C) in an uncrosslinked state upon filling of an interlayer space (upon attachment), the storage modulus and loss modulus are remarkably lowered. Accordingly, even a thin filling material can sufficiently follow steps at decorative printing portions or wiring to remove bubbles remaining at the borders of the steps. The irradiation with light after the filling (attachment) allows the interlayer filling material for a touch panel to be crosslinked. The crosslinked interlayer filling material for a touch panel can exhibit a high storage modulus even in high temperature and high humidity environment. In such a case, even when fine bubbles remaining around minute contaminants after the attachment try to grow in high temperature and high humidity environment, the interlayer filling material for a touch panel having a high storage modulus is not deformed by that stress and suppresses the growth of the bubbles.

The present invention relates to a use of an interlayer filling material for filling an interlayer space between a touch panel and another component or an interlayer space between transparent conductive films included in the touch panel, the interlayer filling material being for a touch panel and including the polyvinyl acetal resin composition.

In the case where the interlayer filling material for a touch panel is in a sheet shape, the thickness of the sheet is not particularly limited and may be determined in accordance with the application thereof. The lower limit thereof is preferably 5 $\mu$m and the upper limit thereof is preferably 800 $\mu$m. With the thickness of less than 5 $\mu$m, bubbles are likely to remain at the steps upon filling of an interlayer space (upon attachment). The lower limit of the thickness is more preferably 10 $\mu$m and the upper limit thereof is more preferably 400 $\mu$m. The lower limit is still more preferably 50 $\mu$m and the upper limit is still more preferably 300 $\mu$m. The lower limit is further preferably 100 $\mu$m and the upper limit is further preferably 200 $\mu$m.

The interlayer filling material for a touch panel may be produced by any method. In the case of a sheet-shaped interlayer filling material, an exemplary method includes molding a composition containing the polyvinyl acetal, the photoradical polymerization initiator, the monomer or oligomer having a radical polymerizable double bond, and optionally added additives such as a plasticizer, into a sheet by a conventional film-forming method such as an extrusion method, an application method, a casting method, a calendaring method, or a pressing method. In particular, an extrusion method is preferred because it contributes to excellent production efficiency. The interlayer filling material for a touch panel is not crosslinked even at high temperature during the extrusion to be easily moldable.

The interlayer filling material for a touch panel is used to fill at least one interlayer space selected from the group consisting of an interlayer space between a surface protection panel and a touch panel, an interlayer space between the touch panel and a polarizing film, and an interlayer space between transparent conductive films included in the touch panel in a personal digital assistant (e.g., smartphones, tablet PCs) or a flat-type or flexible-type image display device (e.g., electronic paper, PDAs, TVs, game machines) including an image display panel such as LCD, EL, or PDP.

The interlayer filling material for a touch panel can sufficiently follow steps at decorative printing portions or wiring even in the shape of a thin filling material, thereby removing bubbles remaining at the borders of the steps.

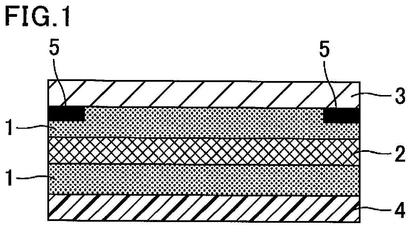

Fig. 1 is a cross-sectional view schematically illustrating an exemplary application of the interlayer filling material for a touch panel. In Fig. 1, the interlayer space between a surface protection panel 3 and a touch panel 2 and the interlayer space between the touch panel 2 and a polarizing film 4 are filled with an interlayer filling material for a touch panel 1.

In Fig. 1, decorative printing portions 5 are formed at the periphery on the rear side of the surface protection panel 3 for the purpose of masking or the like, and the interlayer filling material for a touch panel 1 sufficiently follows steps formed by such decorative printing portions 5 and steps (not illustrated) of the wiring formed in the touch panel 2 to remove bubbles remaining at the borders of the steps.

The present invention also encompasses a laminate including a touch panel; and the above interlayer filling material for a touch panel, the interlayer filling material for a touch panel filling at least one interlayer space selected from the group consisting of an interlayer space between a surface protection panel and the touch panel, an interlayer space between the touch panel and a polarizing film, and an interlayer space between transparent conductive films included in the touch panel.

The surface protection panel is not particularly limited, and may be one commonly used for personal digital assistants, flat-type or flexible-type image display devices, or the like, such as a glass sheet, a polycarbonate sheet, or an acrylic sheet.

The touch panel is not particularly limited, and may be one commonly used for personal digital assistants, flat-type or flexible-type image display devices, or the like, such as a touch panel including a plurality of layers (e.g., ITO film). The configuration of the touch panel is not particularly limited, and examples thereof include the out-cell type, in-cell type, on-cell type, cover glass-integrated type, and cover sheet-integrated type. The system of the touch panel is also not particularly limited, and examples thereof include the resistive film type, capacitive type, optical type, and ultrasonic type.

The polarizing film is also not particularly limited, and may be one commonly used for personal digital assistants, flat-type or flexible-type image display devices, or the like.

The method for producing a laminate by filling at least one interlayer space selected from the group consisting of an interlayer space between a surface protection panel and a touch panel, an interlayer space between the touch panel and a polarizing film, and an interlayer space between transparent conductive films included in the touch panel, with the interlayer filling material for a touch panel is not particularly limited. An exemplary method includes placing the interlayer filling material for a touch panel in the interlayer space between a surface protection panel and a touch panel, the interlayer space between the touch panel and a polarizing film, and the interlayer space between transparent conductive films included in the touch panel, and preliminarily pressure-bonding the resulting laminate under heating at around 70°C. The preliminary pressure-bonding with heat may be performed using a vacuum laminator under the conditions of 1 atm, 70°C, and 30 minutes. After the preliminary pressure-bonding with heat, the main pressure bonding may be carried out by an autoclave treatment (e.g., at 85°C and 0.5 MPa or more for 30 minutes) or the like, and the polyvinyl acetal is crosslinked by irradiation with light. The laminate of the present invention can be thus prepared.

The irradiation with light may be carried out by any method. An exemplary method includes irradiating the laminate after the main pressure bonding with light using an ultraviolet light irradiation device such as an ultra-high pressure mercury lamp.

The wavelength or illuminance of the light for the irradiation may be determined as appropriate in accordance with the type of the hydrogen abstraction type photoinitiator. For example, in the case where benzophenone is used as the hydrogen abstraction type photoinitiator, the irradiation is preferably performed with light having a wavelength of 250 to 400 nm at an illuminance of 10 mW/cm$^2$ for 10 seconds to 30 minutes.

- Advantageous Effects of Invention

The present invention uses a polyvinyl acetal resin composition that is excellent in thermal stability and moldable by an extrusion method and can exhibit a high storage modulus even under high temperature to provide a laminate produced using the above interlayer filling material for a touch panel.

BRIEF DESCRIPTION OF DRAWINGS

Fig. 1 is a cross-sectional view schematically illustrating a use of the interlayer filling material for a touch panel of the present invention.

DESCRIPTION OF EMBODIMENTS

Materials used according to the present invention will be specifically described in the following with reference to, but not limited to, the examples.

(Example 1)

(1) Preparation of polyvinyl butyral

A reactor equipped with a stirrer was charged with 2,700 mL of ion exchange water and 300 g of polyvinyl alcohol having an average degree of polymerization of 1,800 and a degree of saponification of 99.3 mol%, and the contents were heated with stirring to be dissolved, thereby preparing a solution. To the obtained solution was added as a catalyst 35% by weight hydrochloric acid such that the hydrochloric acid concentration was set to 0.2% by weight. The temperature of the mixture was adjusted to 15°C, and 21 g of n-butyraldehyde (n-BA) was added thereto with stirring. Then, 145 g of n-butyraldehyde (n-BA) was further added, so that a polyvinyl butyral resin in the form of white particles was precipitated. Fifteen minutes after the precipitation, 35% by weight hydrochloric acid was added such that the hydrochloric acid concentration was set to 1.8% by weight. The mixture was heated to 50°C and aged at 50°C for two hours. After cooling and neutralization of the solution, the polyvinyl butyral resin was washed with water and then dried, thereby preparing polyvinyl butyral (PVB) .

The obtained polyvinyl butyral had a hydroxy group content of 31.0 mol%, an acetyl group content of 0.7 mol%, and a degree of butyralization (Bu degree) of 68.3 mol%.

(2) Preparation of a polyvinyl butyral resin composition

To 100 parts by weight of the obtained polyvinyl butyral were added 30 parts by weight of triethylene glycol-di-2-ethylhexanoate (3GO) as a plasticizer, 1 part by weight of benzophenone as a photoradical polymerization initiator, and 4 parts by weight of trimethylolpropane triacrylate as a monomer having a radical polymerizable double bond. They were sufficiently kneaded to give a polyvinyl butyral resin composition.

(3) Preparation of an interlayer filling material for a touch panel

To 100 parts by weight of the obtained polyvinyl butyral were added 30 parts by weight of triethylene glycol-di-2-ethylhexanoate (3GO) as a plasticizer, 1 part by weight of benzophenone as a photoradical polymerization initiator, and 4 parts by weight of trimethylolpropane triacrylate as a monomer having a radical polymerizable double bond. They were sufficiently kneaded to give a mixture. The obtained mixture was press-molded into a sheet using a press-molding machine, thereby preparing an interlayer filling material for a touch panel having a thickness of 150 μm.

The obtained interlayer filling material for a touch panel was irradiated with light having a wavelength of 365 nm at an illuminance of 10 mW/cm$^2$ for 1,200 seconds using an ultra-high pressure mercury lamp.

The storage modulus G' at 200°C of the sheet-shaped molded article before and after the irradiation was measured using a dynamic viscoelastometer such as ARES-G2 (TA Instruments) or ADVA-200 (IT Measurement Co.,

Ltd.) under the conditions of a temperature decreasing rate of 3°C/min, a frequency of 1 Hz, and a strain of 1%. The storage modulus G' before the irradiation was 14,700 Pa and the storage modulus G' after the irradiation was 127,000 Pa.

(Example 2)

A polyvinyl butyral resin composition was obtained in the same manner as in Example 1 except that 1 part by weight of thioxanthone was used as the photoradical polymerization initiator. An interlayer filling material for a touch panel was obtained in the same manner as in Example 1.

(Example 3)

A polyvinyl butyral resin composition was obtained in the same manner as in Example 1 except that 0.5 parts by weight of benzophenone was used as the photoradical polymerization initiator. An interlayer filling material for a touch panel was obtained in the same manner as in Example 1.

(Example 4)

A polyvinyl butyral resin composition was obtained in the same manner as in Example 1 except that 10 parts by weight of ethoxy trimethylolpropane triacrylate was used as the monomer having a radical polymerizable double bond. An interlayer filling material for a touch panel was obtained in the same manner as in Example 1.

(Example 5)

A polyvinyl butyral resin composition was obtained in the same manner as in Example 1 except that 4 parts by weight of ditrimethylolpropane tetraacrylate was used as the oligomer having a radical polymerizable double bond, instead of the monomer having a radical polymerizable double bond. An interlayer filling material for a touch panel was obtained in the same manner as in Example 1.

(Example 6)

A polyvinyl butyral resin composition was obtained in the same manner as in Example 1 except that 4 parts by weight of dipentaerythritol hexaacrylate was used as the oligomer having a radical polymerizable double bond, instead of the monomer having a radical polymerizable double bond. An interlayer filling material for a touch panel was obtained in the same manner as in Example 1.

(Example 7)

A polyvinyl butyral resin composition was obtained in the same manner as in Example 1 except that 10 parts by weight of trimethylolpropane triacrylate was used as the monomer having a radical polymerizable double bond. An interlayer filling material for a touch panel was obtained in the same manner as in Example 1.

(Example 8)

A polyvinyl butyral resin composition was obtained in the same manner as in Example 1 except that no plasticizer was used and 30 parts by weight of trimethylolpropane triacrylate was used as the monomer having a radical polymerizable double bond. An interlayer filling material for a touch panel was obtained in the same manner as in Example 1.

(Example 9)

A polyvinyl butyral resin composition was obtained in the same manner as in Example 1 except that 0.5 parts by weight of trimethylolpropane triacrylate was used as the monomer having a radical polymerizable double bond. An interlayer filling material for a touch panel was obtained in the same manner as in Example 1.

(Comparative Example 1)

A polyvinyl butyral resin composition was obtained in the same manner as in Example 1 except that the photoradical polymerization initiator and the monomer having a radical polymerizable double bond were not added. An interlayer filling material for a touch panel was obtained in the same manner as in Example 1.

(Comparative Example 2)

A polyvinyl butyral resin composition was obtained in the same manner as in Example 1 except that the monomer having a radical polymerizable double bond was not added. An interlayer filling material for a touch panel was obtained in the same manner as in Example 1.

(Comparative Example 3)

A polyvinyl butyral resin composition was obtained in the same manner as in Example 1 except that the photoradical polymerization initiator was not added. An interlayer filling material for a touch panel was obtained in the same manner as in Example 1.

(Comparative Example 4)

A polyvinyl butyral resin composition was obtained by adding 30 parts by weight of triethylene glycol-di-2-ethylhexanoate (3GO) as the plasticizer and 0.05 parts by weight of boric acid to 100 parts by weight of polyvinyl butyral prepared by the same method as in Example 1 and kneading them sufficiently. An interlayer filling material for a touch panel was obtained in the same manner as in Example 1.

(Comparative Example 5)

(1) Preparation of an acrylic copolymer

An amount of 65.0 parts by weight of n-butyl acrylate, 26.0 parts by weight of methyl methacrylate, 4.0 parts by weight of ethyl acrylate, 1.0 part by weight of hydroxy ethyl acrylate, 4.0 parts by weight of acrylic acid, and 0.2 parts by weight of 2,2'-azobisisobutyronitrile as a polymerization initiator were dissolved in 100 parts by weight of ethyl acetate in a reaction vessel equipped with a stirrer, a reflux condenser, a thermometer, and a nitrogen gas inlet. After the air inside the reaction vessel was substituted with nitrogen, the solution was polymerized at 80°C for eight hours to give an acrylic copolymer.

The obtained acrylic copolymer was diluted with tetrahydrofuran (THF) by a factor of 50 times. The resulting diluted solution was passed through a filter (material: polytetrafluoroethylene, pore size: 0.2 $\mu$m) to prepare a measurement sample. The obtained measurement sample was placed in a gel permeation chromatograph (produced by Waters, 2690 Separations Model) and subjected to GPC measurement under the conditions of a sample flow rate of 1 ml/min and a column temperature of 40°C. The molecular weight of the acrylic copolymer in terms of polystyrene was thus determined. Based on the measurement result, the weight average molecular weight (Mw) was obtained.

The obtained acrylic copolymer had a weight average molecular weight of 650,000.

The column used was GPC LF-804 (Showa Denko K.K.) and the detector used was a differential refractometer.

(2) Preparation of an interlayer filling material for a touch panel

An amount of 100 parts by weight of the obtained acrylic copolymer was diluted with ethyl acetate to give an adhesive solution with a resin solid content of 45%. An amount of 100 parts by weight of the adhesive solution was blended with 1 part by weight of an isocyanate crosslinking agent (Coronate L-45 available from Nippon Polyurethane Industry Co., Ltd., solid content: 45%), stirred for 15 minutes, applied to a mold release-treated surface of a mold release PET film (thickness: 50 $\mu$m) to a dry thickness of 150 pm, and dried at 80°C for 15 minutes. On the obtained adhesive layer was placed another mold release PET film in such a manner that the mold release-treated surface thereof was in contact with the adhesive layer, thereby preparing a laminate. The resulting sheet was left to stand at 23°C for five days to give an interlayer filling material for a touch panel (thickness: 150 $\mu$m) having a mold release PET film attached to each surface.

(Evaluation)

The polyvinyl butyral resin compositions and interlayer filling materials for a touch panel obtained in the examples and comparative examples were evaluated by the following methods.

Tables 1 and 2 show the results.

(1) Evaluation of the thermal stability of the polyvinyl butyral resin composition

The obtained polyvinyl butyral resin composition was subjected to heat treatment at 180°C for one hour. The polyvinyl butyral resin composition after the heat treatment was visually observed. The case where gelling was not at all observed was rated "o (Good)" and the case where gelling was observed even in a part was rated "x (Poor)".

(2) Measurement of the gel fraction before and after irradiation of the polyvinyl butyral resin composition with light

Each of the polyvinyl butyral resin compositions obtained in the examples and comparative examples was extrusion-molded under the temperature condition of 200°C into sheet-shaped molded articles having a thickness of 200 $\mu$m.
A sheet-shaped molded article obtained above was irradiated with light having a wavelength of 365 nm at an illuminance of 10 mW/cm$^2$ for 1,200 seconds using an ultra-high pressure mercury lamp.
The sheet-shaped molded articles before and after the irradiation were immersed in ethyl acetate at 23°C for 24 hours, taken out from the ethyl acetate, and dried under the condition of 110°C for one hour. The weights of the dried test pieces were measured, and the gel fraction was calculated using the following equation.

$$\texttt{Gel fraction (\% by weight) = 100} \times \texttt{W}_2/\texttt{W}_1$$

($W_1$: weight of the test piece before immersion, $W_2$: weight of the test piece after the immersion and drying)

(3) Measurement of the storage modulus of the polyvinyl butyral resin composition before and after irradiation with light

Each of the polyvinyl butyral resin compositions obtained in the examples and comparative examples was extrusion-molded at the temperature condition of 200°C into sheet-shaped molded articles having a thickness of 200 $\mu$m.
Four sheet-shaped molded articles obtained above were stacked to give a laminate having a thickness of 800 $\mu$m. The laminate was used as a sample for measuring the storage modulus before UV irradiation.
Separately, the obtained sheet-shaped molded articles were irradiated with light having a wavelength of 365 nm at an illuminance of 10 mW/cm$^2$ for 500 seconds using an ultra-high pressure mercury lamp. Four UV-irradiated sheet-shaped molded articles were stacked to give a laminate having a thickness of 800 $\mu$m. The laminate was used as a sample for measuring the storage modulus after UV irradiation.
The storage moduli G' at 200°C of the sample for measuring the storage modulus before UV irradiation and the sample for measuring the storage modulus after UV irradiation were measured using a dynamic viscoelastometer ARES-G2 (TA Instruments) under the conditions of a temperature decreasing rate of 3°C/min, a frequency of 1 Hz, and a strain of 1%.

(4) Evaluation of adhesiveness of the interlayer filling material for a touch panel

The interlayer filling material for a touch panel was cut to a size of 25 mm $\times$ 100 mm and attached to a glass. A plasma-treated PET film (25 mm $\times$ 100 mm) was attached thereto and the laminate was vacuum-laminated at 25°C, followed by pressure bonding with heat in an autoclave at 75°C and 0.5 MPa for 30 minutes. An evaluation sample was thus prepared. The obtained evaluation sample was subjected to 180° peel test at 300 mm/min in conformity with JIS K 6854:1994 for determining the peel strength. The case where the peel strength was 5 N/25 mm or more was rated "o (Good)" and the case where the peel strength was less than 5 N/25 mm was rated "$\times$ (Poor)".

(5) Evaluation of adhesive deposition of the interlayer filling material for a touch panel

The interlayer filling material for a touch panel was punched out 50 times using a thomson blade (50 mm $\times$ 50 mm), and whether or not adhesion of the interlayer filling material for a touch panel (adhesive deposits) to the thomson blade occurs was visually observed. The case where no adhesive deposits were observed on the thomson blade was rated "o (Good)" and the case where adhesive deposits were observed was rated "x (Poor)".

(6) Evaluation of scattering prevention properties of the interlayer filling material for a touch panel

One surface of the interlayer filling material for a touch panel was attached to a glass (15.0 cm $\times$ 7.5 cm, thickness of 0.7 mm), and to the other surface of the interlayer filling material for a touch panel was attached an ITO-coated polyethylene terephthalate film (ITO-PET), thereby preparing a glass/interlayer filling material for a touch panel/ITO-PET film structure. The structure was pressure-bonded using a vacuum laminator at 70°C and 1 atm for 30 minutes, treated in an autoclave at 85°C and 0.5 MPa for 30 minutes, and decompressed after being cooled to 30°C or lower. Then, the laminate was irradiated with light having a wavelength of 365 nm at an illuminance of 10 mW/cm$^2$ for 1,200 seconds using an ultra-high pressure mercury lamp, thereby obtaining a laminate in which the interlayer space between the glass and the ITO-PET film was filled with the interlayer filling material for a touch panel.

To the obtained laminate was dropped an iron ball (130 g) from the height of 1 m in an environment of 23°C. The case where the laminate was not broken was scored 1. The case where the laminate was broken but glass fragments were not scattered and no fracture or cohesive failure was observed in the interlayer filling material for a touch panel was scored 2. The case where the laminate was broken and glass fragments were not scattered but a partial fracture was observed in the interlayer filling material for a touch panel was scored 3. The case where a small amount of glass fragments was scattered and a fracture or cohesive failure was observed in the interlayer filling material for a touch panel was scored 4. The case where glass fragments were scattered and a fracture or cohesive failure was observed in the interlayer filling material for a touch panel was scored 5. The scores 1 to 3 were rated "o (Good)" and the scores 4 and 5 were rated "x (Poor)".

It is to be noted that glass powder generated from the glass itself at the part where the ball hit and glass pieces generated by breakage of the glass itself were not included in the glass fragments. The glass fragments evaluated were glass pieces generated by detachment of the glass from the interlayer filling material for a touch panel at the interface between the glass and the interlayer filling material for a touch panel and glass pieces to which the filling material adheres generated by the cohesive failure of the interlayer filling material for a touch panel.

(7) Evaluation of defoaming properties of the interlayer filling material for a touch panel

To a white plate glass (76 mm × 52 mm, thickness of 1.0 to 1.2 mm, S9112 available from Matsunami Glass Ind., Ltd.) was attached one surface of the interlayer filling material for a touch panel cut to the same size as the white plate glass, and to the other surface of the interlayer filling material for a touch panel was attached an ITO-PET film (ITO-coated polyethylene terephthalate (PET) film) cut to the same size as the white plate glass, thereby preparing a glass/interlayer filling material for a touch panel/ITO-PET film structure. In this process, bubbles were made to be entrapped at the interface between the glass and the interlayer filling material for a touch panel. Next, the structure was pressure-bonded using a vacuum laminator at 70°C and 1 atm for 30 minutes, treated in an autoclave at 85°C and 0.5 MPa for 30 minutes, and decompressed after being cooled to 30°C or lower. Then, the resulting structure was irradiated with light having a wavelength of 365 nm at an illuminance of 10 mW/cm$^2$ for 1,200 seconds using an ultra-high pressure mercury lamp, thereby obtaining a laminate in which the interlayer space between the glass and the ITO-PET film was filled with the interlayer filling material for a touch panel.

The obtained laminate was observed using a digital microscope (Keyence Corporation). The case where remaining bubbles were not observed was rated "o (Good)" and the case where remaining bubbles were observed was rated "x (Poor)".

(8) Evaluation of followability to steps of the interlayer filling material for a touch panel

A single-sided adhesive tape having a thickness of 75 $\mu$m in the shape of a square frame (outer frame: 76 mm × 52 mm, inner frame: 56 mm × 32 mm) was attached to a white plate glass (S9112 available from Matsunami Glass Ind., Ltd, size: 76 mm × 52 mm, thickness: 1.0 to 1.2 mm) to form a step.

The interlayer filling material for a touch panel was cut to a size of 76 mm × 52 mm and attached to the surface with a square frame-shaped step of the white plate glass. An ITO-coated polyethylene terephthalate film (ITO-PET available from Sekisui Nano Coat Technology) was cut to a size of 76 mm × 52 mm and attached to the interlayer filling material for a touch panel. They were each attached in such a manner that entering of bubbles was avoided as far as possible. The resulting structure was pressure-bonded using a vacuum laminator at 70°C and 1 atm for 30 minutes, treated in an autoclave at 85°C and 0.5 MPa for 30 minutes, and decompressed after being cooled to 30°C or lower. Next, the structure was irradiated with light having a wavelength of 365 nm at an illuminance of 10 mW/cm$^2$ for 1,200 seconds using an ultra-high pressure mercury lamp, thereby obtaining a laminate in which the interlayer space between the glass and the ITO-PET film was filled with the interlayer filling material for a touch panel.

The obtained laminate was observed using a digital microscope (Keyence Corporation). The case where bubbles remaining at the interface with the step was observed was rated "x (Poor)" and the case where remaining bubbles were not observed was rated "o (Good)".

(9) Evaluation of foaming after high temperature and high humidity treatment of the interlayer filling material for a touch panel

Over the surface of a white plate glass (S9112 available from Matsunami Glass Ind., Ltd., size: 76 mm × 52 mm, thickness: 1.0 to 1.2 mm) were uniformly dispersed particles (Micropearl available from Sekisui Chemical Co., Ltd.) formed of a divinylbenzene compound with a particle size of 40 $\mu$m as model contaminants at a density of 30 pcs/cm$^2$.
The interlayer filling material for a touch panel was cut to a size of 76 mm × 52 mm and attached to the surface where the model contaminants were dispersed of the white plate glass. An ITO-coated polyethylene terephthalate film (ITO-PET available from Sekisui Nano Coat Technology) was cut to a size of 76 mm × 52 mm and attached to the interlayer filling material for a touch panel. They were each attached in such a manner that entering of bubbles was avoided as far as possible. The resulting structure was pressure-bonded using a vacuum laminator at 70°C and 1 atm for 30 minutes, treated in an autoclave at 85°C and 0.5 MPa for 30 minutes, and decompressed after being cooled to 30°C or lower. Next, the structure was irradiated with light having a wavelength of 365 nm at an illuminance of 10 mW/cm$^2$ for 1,200 seconds using an ultra-high pressure mercury lamp, thereby obtaining a laminate in which the interlayer space between the glass and the ITO-PET film was filled with the interlayer filling material for a touch panel.
Then, the resulting laminate was left to stand under high temperature and high humidity condition at a temperature of 85°C and a humidity of 85% for 250 hours. The high temperature and high humidity treatment was thus carried out.
The structure after the high temperature and high humidity treatment was observed using a digital microscope (Keyence Corporation). The case where no foaming was observed was rated "o (Good)" and the case where foaming was observed was rated "x (Poor)".

[Table 1]

| | | | Example 1 | Example 2 | Example 3 | Example 4 | Example 5 | Example 6 | Example 7 |
|---|---|---|---|---|---|---|---|---|---|
| Interlayer filling material | Resin type | | Polyvinyl butyral | Polyvinyl butyral | Polyvinyl butyral | Polyvinyl butyral | Polyvinyl butyral | Polyvinyl butyral | Polyvinyl butyral |
| | Plasticizer (parts by weight) | | 30 | 30 | 30 | 30 | 30 | 30 | 30 |
| | Hydrogen abstraction type photoinitiator | Type | Benzophenone | Thioxanthone | Benzophenone | Benzophenone | Benzophenone | Benzophenone | Benzophenone |
| | | Numer of parts | 1 | 1 | 0.5 | 1 | 1 | 1 | 1 |
| | Monomer having a radical polymerizable double bond | Type | Trimethylolpropane triacrylate | Trimethylolpropane triacrylate | Trimethylolpropane triacrylate | Ethoxy trimethylolpropane triacrylate | Ditrimethylolpropane tetraacrylate | Dipentaerythritol hexaacrylate | Trimethylolpropane triacrylate |
| | | Number of parts | 4 | 4 | 4 | 10 | 4 | 4 | 10 |
| | Boric acid | Number of parts | - | - | - | - | - | - | - |
| Evaluation (resin composition) | Thermal stability | | ○ | ○ | ○ | ○ | ○ | ○ | ○ |
| | Gel fraction (%) | Before irradiation with light | 0 | 0 | 0 | 0 | 0 | 0 | 0 |
| | | After irradiation with light | 56.1 | 50.9 | 54.9 | 39.9 | 59.3 | 58.5 | 67.1 |
| | Storage modulus (Pa) at 200°C | Before irradiation with light | 14700 | 14100 | 14700 | 10600 | 14300 | 14100 | 13700 |
| | | After irradiation with light | 127000 | 117000 | 125000 | 72600 | 132000 | 129000 | 200300 |

(continued)

| | | Example 1 | Example 2 | Example 3 | Example 4 | Example 5 | Example 6 | Example 7 |
|---|---|---|---|---|---|---|---|---|
| Evaluation (interlayer filling material) | Adhesiveness | ○ | ○ | ○ | ○ | ○ | ○ | ○ |
| | Adhesive deposition | ○ | ○ | ○ | ○ | ○ | ○ | ○ |
| | Scattering prevention properties | ○ | ○ | ○ | ○ | ○ | ○ | ○ |
| | Defoaming properties | ○ | ○ | ○ | ○ | ○ | ○ | ○ |
| | Followability to steps | ○ | ○ | ○ | ○ | ○ | ○ | ○ |
| | Foaming after high-temperature, high-humidity treatment | ○ | ○ | ○ | ○ | ○ | ○ | ○ |

[Table 2]

| | | | Example 8 | Example 9 | Comparative Example 1 | Comparative Example 2 | Comparative Example 3 | Comparative Example 4 | Comparative Example 5 |
|---|---|---|---|---|---|---|---|---|---|
| Interlayer filling material | Resin type | | Polyvinyl butyral | Polyvinyl butyral | Polyvinyl butyral | Polyvinyl butyral | Polyvinyl butyral | Polyvinyl butyral | Acrylic copolymer |
| | Plasticizer (parts by weight) | | 0 | 30 | 30 | 30 | 30 | 30 | - |
| | Hydrogen abstraction type photoinitiator | Type | Benzophenone | Benzophenone | - | Benzophenone | - | - | - |
| | | Numer of parts | 1 | 1 | - | 1 | - | - | - |
| | Monomer having a radical polymerizable double bond | Type | Trimethylolpropane triacrylate | Trimethylolpropane triacrylate | - | - | Trimethylolpropane triacrylate | - | - |
| | | Number of parts | 30 | 0.5 | - | - | 4 | - | - |
| | Boric acid | Number of parts | - | - | - | - | - | 0.05 | - |
| Evaluation (resin composition) | Thermal stability | | ○ | ○ | ○ | ○ | ○ | × | - |
| | Gel fraction (%) | Before irradiation with light | 0 | 0 | 0 | 0 | 0 | - | - |
| | | After irradiation with light | 69.6 | 56.1 | 0 | 0.9 | 0.4 | - | - |
| | Storage modulus (Pa) at 200°C | Before irradiation with light | 39200 | 15200 | 15400 | 14900 | 14400 | - | - |
| | | After irradiation with light | 1150000 | 51000 | 15400 | 15500 | 15000 | - | - |

EP 3 360 903 B1

18

| | | Example 8 | Example 9 | Comparative Example 1 | Comparative Example 2 | Comparative Example 3 | Comparative Example 4 | Comparative Example 5 |
|---|---|---|---|---|---|---|---|---|
| Evaluation (interlayer filling material) | Adhesiveness | ○ | ○ | ○ | o | ○ | ○ | ○ |
| | Adhesive deposition | ○ | ○ | ○ | ○ | ○ | ○ | × |
| | Scattering prevention properties | ○ | ○ | ○ | ○ | ○ | ○ | × |
| | Defoaming properties | ○ | ○ | ○ | ○ | ○ | × | × |
| | Followability to steps | ○ | ○ | ○ | ○ | ○ | × | × |
| | Foaming after high-temperature, high-humidity treatment | ○ | ○ | × | × | × | ○ | × |

INDUSTRIAL APPLICABILITY

The present invention uses an interlayer filling material for a touch panel prepared from a polyvinyl acetal resin composition in a laminate with a touch panel.

REFERENCE SIGNS LIST

1: Interlayer filling material for a touch panel
2: Touch panel
3: Surface protection panel
4: Polarizing film
5: Decorative printing portion

**Claims**

1.  A use of an interlayer filling material (1) for a touch panel comprising a polyvinyl acetal resin composition comprising:

    a polyvinyl acetal;
    a plasticizer;
    a photoradical polymerization initiator, which is a hydrogen abstraction type photoinitiator; and
    a monomer or oligomer having a radical polymerizable double bond,
    for filling an interlayer space between a touch panel (2) and another component (3, 4) or an interlayer space between transparent conductive films included in the touch panel (2).

2.  The use according to claim 1,
    wherein the total amount of the polyvinyl acetal and the plasticizer is 50% by weight or more.

3.  The use according to claim 1 or 2,
    wherein the polyvinyl acetal is polyvinyl butyral.

4.  The use according to claim 1, 2 or 3,
    wherein the photoradical polymerization initiator is benzophenone.

5.  The use according to claim 1, 2, 3 or 4,
    wherein the amount of the photoradical polymerization initiator relative to 100 parts by weight of the polyvinyl acetal is 0.1 to 5 parts by weight.

6.  The use according to claim 1, 2, 3, 4 or 5,
    wherein the monomer or oligomer having a radical polymerizable double bond is a polyfunctional monomer or oligomer having two or more radical polymerizable double bonds in a molecule.

7.  The use according to claim 1, 2, 3, 4, 5 or 6,
    wherein the amount of the monomer or oligomer having a radical polymerizable double bond relative to 100 parts by weight of the polyvinyl acetal is 0.1 to 40 parts by weight.

8.  A laminate comprising:

    a touch panel (2); and
    the interlayer filling material (1) for a touch panel comprising a polyvinyl acetal resin composition comprising:

        a polyvinyl acetal;
        a plasticizer;
        a photoradical polymerization initiator, which is a hydrogen abstraction type photoinitiator; and
        a monomer or oligomer having a radical polymerizable double bond,
        the interlayer filling material for a touch panel filling at least one interlayer space selected from the group consisting of an interlayer space between a surface protection panel (3) and the touch panel (2), an interlayer space between the touch panel (2) and a polarizing film (4), and interlayer spaces between transparent conductive films included in the touch panel.

9. The laminate according to claim 8,
   wherein the total amount of the polyvinyl acetal and the plasticizer is 50% by weight or more.

10. The laminate according to claim 8 or 9,
    wherein the polyvinyl acetal is polyvinyl butyral.

11. The laminate according to claim 8, 9 or 10,
    wherein the photoradical polymerization initiator is benzophenone.

12. The laminate according to claim 8, 9, 10 or 11,
    wherein the amount of the photoradical polymerization initiator relative to 100 parts by weight of the polyvinyl acetal is 0.1 to 5 parts by weight.

13. The laminate according to claim 8, 9, 10, 11 or 12,
    wherein the monomer or oligomer having a radical polymerizable double bond is a polyfunctional monomer or oligomer having two or more radical polymerizable double bonds in a molecule.

14. The laminate according to claim 8, 9, 10, 11, 12 or 13,
    wherein the amount of the monomer or oligomer having a radical polymerizable double bond relative to 100 parts by weight of the polyvinyl acetal is 0.1 to 40 parts by weight.

**Patentansprüche**

1. Verwendung eines Zwischenschicht-Füllmaterials (1) für eine berührungsempfindliche Tafel, das eine Polyvinylacetal-Harzzusammensetzung umfasst, umfassend:

   ein Polyvinylacetal,
   einen Weichmacher,
   einen radikalischen Photopolymerisationsinitiator, der ein Photoinitiator vom Wasserstoffabstraktionstyp ist, und
   ein Monomer oder Oligomer, das eine radikalische polymerisierbare Doppelbindung aufweist,
   zum Füllen eines Zwischenschichtraums zwischen einer berührungsempfindlichen Tafel (2) und einem anderen Bauteil (3, 4) oder eines Zwischenschichtraums zwischen transparenten leitfähigen Schichten, die in der berührungsempfindlichen Tafel (2) eingeschlossen sind.

2. Verwendung nach Anspruch 1,
   wobei die Gesamtmenge des Polyvinylacetals und des Weichmachers 50 Gewichts-% oder mehr beträgt.

3. Verwendung nach Anspruch 1 oder 2,
   wobei das Polyvinylacetal Polyvinylbutyral ist.

4. Verwendung nach Anspruch 1, 2 oder 3,
   wobei der radikalische Photopolymerisationsinitiator ein Benzophenon ist.

5. Verwendung nach Anspruch 1, 2, 3 oder 4,
   wobei die Menge des radikalischen Photopolymerisationsinitiators, bezogen auf 100 Gewichtsteile des Polyvinylacetals, 0,1 bis 5 Gewichtsteile beträgt.

6. Verwendung nach Anspruch 1, 2, 3, 4 oder 5,
   wobei das Monomer oder Oligomer, das eine radikalische polymerisierbare Doppelbindung aufweist, ein polyfunktionelles Monomer oder Oligomer ist, das zwei oder mehr radikalische polymerisierbare Doppelbindungen in einem Molekül aufweist.

7. Verwendung nach Anspruch 1, 2, 3, 4, 5 oder 6,

wobei die Menge des Monomers oder Oligomers, das eine radikalische polymerisierbare Doppelbindung aufweist, bezogen auf 100 Gewichtsteile des Polyvinylacetals, 0,1 bis 40 Gewichtsteile beträgt.

8. Laminat, umfassend:

   eine berührungsempfindliche Tafel (2) und
   das Zwischenschicht-Füllmaterial (1) für eine berührungsempfindliche Tafel, das eine Polyvinylacetal-Harzzusammensetzung umfasst, umfasst:

      ein Polyvinylacetal,
      einen Weichmacher,
      einen radikalischen Photopolymerisationsinitiator, der ein Photoinitiator vom Wasserstoffabstraktionstyp ist, und
      ein Monomer oder Oligomer, das eine radikalische polymerisierbare Doppelbindung aufweist,
      wobei das Zwischenschicht-Füllmaterial für eine berührungsempfindliche Tafel mindestens einen Zwischenschichtraum füllt, der ausgewählt ist aus der Gruppe bestehend aus einem Zwischenschichtraum zwischen einer Oberflächenschutztafel (3) und der berührungsempfindlichen Tafel (2), einem Zwischenschichtraum zwischen der berührungsempfindlichen Tafel (2) und einer Polarisationsschicht (4) und Zwischenschichträumen zwischen transparenten leitfähigen Schichten, die in der berührungsempfindlichen Tafel eingeschlossen sind.

9. Laminat nach Anspruch 8,
   wobei die Gesamtmenge des Polyvinylacetals und des Weichmachers 50 Gewichts-% oder mehr beträgt.

10. Laminat nach Anspruch 8 oder 9,
    wobei das Polyvinylacetal Polyvinylbutyral ist.

11. Laminat nach Anspruch 8, 9 oder 10,
    wobei der radikalische Photopolymerisationsinitiator Benzophenon ist.

12. Laminat nach Anspruch 8, 9, 10 oder 11,
    wobei die Menge des radikalischen Photopolymerisationsinitiators, bezogen auf 100 Gewichtsteile des Polyvinylacetals, 0,1 bis 5 Gewichtsteile beträgt.

13. Laminat nach Anspruch 8, 9, 10, 11 oder 12,
    wobei das Monomer oder Oligomer, das eine radikalische polymerisierbare Doppelbindung aufweist, ein polyfunktionelles Monomer oder Oligomer ist, das zwei oder mehr radikalische polymerisierbare Doppelbindungen in einem Molekül aufweist.

14. Laminat nach Anspruch 8, 9, 10, 11, 12 oder 13,
    wobei die Menge des Monomers oder Oligomers, das eine radikalische polymerisierbare Doppelbindung aufweist, bezogen auf 100 Gewichtsteile des Polyvinylacetals, 0,1 bis 40 Gewichtsteile beträgt.


**Revendications**

1. Utilisation d'un matériau de charge de couche intermédiaire (1) pour un panneau tactile comprenant une composition de résine de poly(acétal de vinyle) comprenant :

   un poly(acétal de vinyle) ;
   un plastifiant ;
   un initiateur de polymérisation photoradicalaire, qui est un photo-initiateur de type abstraction d'hydrogène ; et
   un monomère ou oligomère ayant une double liaison radicalairement polymérisable,
   pour charger un espace de couche intermédiaire entre un panneau tactile (2) et un autre constituant (3, 4) ou un espace de couche intermédiaire entre des films conducteurs transparents inclus dans le panneau tactile (2).

2. Utilisation selon la revendication 1,
   dans laquelle la quantité totale du poly(acétal de vinyle) et du plastifiant est de 50 % en masse ou supérieure.

3. Utilisation selon la revendication 1 ou 2,
dans laquelle le poly(acétal de vinyle) est le poly(butyral de vinyle).

4. Utilisation selon la revendication 1, 2 ou 3,
dans laquelle l'initiateur de polymérisation photoradicalaire est la benzophénone.

5. Utilisation selon la revendication 1, 2, 3 ou 4,
dans laquelle la quantité de l'initiateur de polymérisation photoradicalaire par rapport à 100 parties en masse du poly(acétal de vinyle) est de 0,1 à 5 parties en masse.

6. Utilisation selon la revendication 1, 2, 3, 4 ou 5,
dans laquelle le monomère ou oligomère ayant une double liaison radicalairement polymérisable est un monomère ou oligomère polyfonctionnel ayant deux doubles liaisons radicalairement polymérisables ou plus dans une molécule.

7. Utilisation selon la revendication 1, 2, 3, 4, 5 ou 6,
dans laquelle la quantité du monomère ou oligomère ayant une double liaison radicalairement polymérisable par rapport à 100 parties en masse du poly(acétal de vinyle) est de 0,1 à 40 parties en masse.

8. Stratifié comprenant :

un panneau tactile (2) ; et
le matériau de charge de couche intermédiaire (1) pour un panneau tactile comprenant une composition de résine de poly(acétal de vinyle) comprenant :

un poly(acétal de vinyle) ;
un plastifiant ;
un inhitiateur de polymérisation photoradicalaire, qui est un photo-initiateur de type abstraction d'hydrogène ; et
un monomère ou oligomère ayant une double liaison radicalairement polymérisable,
le matériau de charge de couche intermédiaire pour un panneau tactile chargeant au moins un espace de couche intermédiaire choisi dans le groupe consistant en un espace de couche intermédiaire entre un panneau de protection de surface (3) et le panneau tactile (2), un espace de couche intermédiaire entre le panneau tactile (2) et un film polarisant (4), et des espaces de couches intermédiaires entre des films conducteurs transparents inclus dans le panneau tactile.

9. Stratifié selon la revendication 8,
dans lequel la quantité totale du poly(acétal de vinyle) et du plastifiant est de 50 % en masse ou supérieure.

10. Stratifié selon la revendication 8 ou 9,
dans lequel le poly(acétal de vinyle) est le poly(butyral de vinyle).

11. Stratifié selon la revendication 8, 9 ou 10,
dans lequel l'initiateur de polymérisation photoradicalaire est la benzophénone.

12. Stratifié selon la revendication 8, 9, 10 ou 11,
dans lequel la quantité de l'initiateur de polymérisation photoradicalaire par rapport à 100 parties en masse du poly(acétal de vinyle) est de 0,1 à 5 parties en masse.

13. Stratifié selon la revendication 8, 9, 10, 11 ou 12,
dans lequel le monomère ou oligomère ayant une double liaison radicalairement polymérisable est un monomère ou oligomère polyfonctionnel ayant deux doubles liaisons radicalairement polymérisables ou plus dans une molécule.

14. Stratifié selon la revendication 8, 9, 10, 11, 12 ou 13,
dans lequel la quantité du monomère ou oligomère ayant une double liaison radicalairement polymérisable par rapport à 100 parties en masse du poly(acétal de vinyle) est de 0,1 à 40 parties en masse.

FIG.1

**EP 3 360 903 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006137078 A
- JP 2003119207 A
- JP 2011102027 A
- JP 2015151499 A
- EP 3296846 A1